# EUROPÄISCHE PATENTSCHRIFT

(11) **EP 0 423 755 B1**
(45) Veröffentlichungstag und Bekanntmachung des Hinweises auf die Patenterteilung: **14.12.1994**
(21) Anmeldenummer: 90119905.9
(22) Anmeldetag: 17.10.1990
(51) Int. Cl.: F16K 31/06

(54) **Elektromagnetisch betätigtes Ventil, insbes. für Antiblockiersysteme in Kraftfahrzeugen**
Solenoid operated valve, especially for motor vehicle antilocking systems
Soupape commandée électromagnétiquement, notamment pour antidérapeurs de véhicules automobiles

(30) Priorität: 18.10.1989 DE 3934771
(43) Veröffentlichungstag der Anmeldung: 24.04.1991
(73) Patentinhaber: LUCAS INDUSTRIES public limited company, Birmingham, B19 2XF West Midlands (GB)
(72) Erfinder: Mohr, Kurt, W-5401 Halsenbach-Ehr (DE); Hahn, Gerhard, W-6534 Stromberg (DE)
(74) Vertreter: Goetz, Rupert, Dipl.-Ing.

(56) Entgegenhaltungen:
- EP-A- 0 289 337
- EP-A- 0 291 649
- DE-A- 3 725 810
- DE-A- 3 802 648
- FR-A- 1 474 917
- US-A- 3 011 753
- US-A- 3 253 611

## Beschreibung

Die Erfindung betrifft ein elektromagnetisch betätigtes Ventil, insbes. für Antiblockiersysteme in Kraftfahrzeugen, nach dem Oberbegriff des Anspruchs 1.

Bei einem bekannten Ventil dieser Gattung (US-A-3011753) ist ein ringförmiger Ventilsitz an einem Ende eines axialen Kanals im Ventilgehäuse ausgebildet, an dessen anderem Ende das Stellglied in einer Steuerkammer angeordnet ist. Durch den axialen Kanal erstreckt sich ein rohrförmiger Fortsatz des Stellglieds in Richtung zu einem Ventilkörper, der am Anker eines Elektromagneten ausgebildet und durch eine Rückstellfeder in Schließrichtung vorgespannt ist, da das Ventil für die Funktion "stromlos zu" vorgesehen ist.

Bei der Bemessung des Durchflußquerschnittes gattungsgemäßer Ventile muß ein Kompromiß zwischen widersprüchlichen Anforderungen gefunden werden. Im allgemeinen ist es wünschenswert, daß der Durchflußquerschnitt möglichst groß ist. Dies gilt besonders bei Verwendung solcher Ventile in Antiblockiersystemen für Kraftfahrzeuge; dort läßt sich eine bei normaler Bremsbetätigung angestrebte kurze Ansprechzeit der Bremsen nur dann einhalten, wenn die Strömung der Bremsflüssigkeit vom Hauptbremszylinder zu den Radbremszylindern nirgends erheblich gedrosselt wird. Andererseits ist eine gewisse Drosselung der Strömung im Ventil erwünscht, wenn dieses geöffnet wird, nachdem es wegen Blockiergefahr eines ihm zugeordneten Rades geschlossen worden ist. In diesem Fall könnte ein ungedrosselter Druckaufbau im Ventil dazu beitragen, eine erneute Blockiergefahr hervorzurufen. Damit in diesem Betriebszustand eine ausreichende Drosselung erreicht wird, ist es üblich, Ventile für Antiblockiersysteme mit einer verhältnismäßig engen, fest eingebauten Drosselstelle auszustatten. Dabei wird ein etwas verzögertes Ansprechen der Bremsen bei normaler Betätigung in Kauf genommen.

Der Erfindung liegt die Aufgabe zugrunde, ein elektromagnetisch betätigtes Ventil, insbes. für Antiblockiersysteme in Kraftfahrzeugen, derart zu gestalten, daß beim Öffnen des Ventils während einer Zeitspanne, in der ein Druckunterschied zwischen Einlaß und Auslaß noch besteht, eine im Vergleich zum vollständig geöffneten Zustand beliebig vorbestimmbare Drosselung stattfindet.

Die Aufgabe ist erfindungsgemäß bei einem Ventil der eingangs beschriebenen Gattung dadurch gelöst, daß das vom Elektromagneten bewegbare Ventilteil kolbenartig axial verschiebbar in einer axial durchgehenden Bohrung im Stellglied geführt ist.

Wenn ein Ventil der eingangs beschriebenen Gattung geschlossen worden ist, beispielsweise bei einem ABS-Regelvorgang, kann in sehr kurzer Zeit ein erhebliches Druckgefälle zwischen dem Einlaß und dem Auslaß entstehen. Dieses Druckgefälle, das beim anschließenden Öffnen bekannter gattungsgemäßer Ventile einen unerwünscht raschen Druckanstieg am Auslaß und in nachgeordneten Aggregaten hervorrufen kann, wird bei dem erfindungsgemäßen Ventil genutzt, um das Stellglied in eine vorbestimmte Anschlagstellung zu bringen, in der es ein vollständiges Öffnen des Ventils solange verhindert, bis der Druckunterschied zwischen Einlaß und Auslaß auf einen vorbestimmten Restbetrag oder sogar vollständig abgebaut worden ist. Solange das Stellglied ein vollständiges Öffnen des Ventils verhindert, wird die Strömung des vom Ventil gesteuerten Fluids zwischen dem Schließkörper und dem Ventilsitz in einem Maß gedrosselt, das davon abhängt, wie die Anschlagstellung des Stellgliedes vorbestimmt worden ist. Die Anschlagstellung kann ein für allemal, beispielsweise durch Bemessung des Stellgliedes und bestimmter Teile des Ventilgehäuses, vorbestimmt sein; grundsätzlich besteht aber auch die Möglichkeit, daß die Anschlagstellung durch eine Schraube oder dergleichen festgelegt und infolgedessen bei Bedarf veränderbar ist.

Das Stellglied kann in Richtung zu seiner Ruhestellung hin von einer im Ventilgehäuse abgestützten Feder vorgespannt sein. Es kann aber auch auf andere Weise dafür gesorgt sein, daß das Stellglied bei Druckausgleich zwischen Einlaß und Auslaß des erfindungsgemäßen Ventils seine Ruhestellung einnimmt. Beispielsweise kann das Stellglied ein Differential- oder Stufenkolben sein.

Die Erfindung ist auf normalerweise geschlossene Ventile in gleicher Weise anwendbar wie auf normalerweise offene Ventile.

Ein Ausführungsbeispiel der Erfindung wird im folgenden mit weiteren Einzelheiten anhand einer schematischen Zeichnung beschrieben, in der ein erfindungsgemäßes, im Ruhezustand offenes Ventil in einem axialen Schnitt dargestellt ist.

Das dargestellte Ventil 10 hat ein Ventilgehäuse 12 mit einem Einlaß 14, einem Auslaß 16 und einem zusätzlichen Anschluß 18, der sich ebenso wie der Einlaß 14 an einen nicht dargestellten Hauptbremszylinder anschließen läßt. Der Auslaß 16 läßt sich an einen ebenfalls nicht dargestellten Radbremszylinder anschließen. Das Ventilgehäuse 12 umschließt eine Ventilkammer 24, in der jeweils mindestens annähernd der gleiche Druck herrscht wie am Auslaß 16. Das Ventilgehäuse 12 hat ferner einen sockelartigen unteren Abschnitt, der von zwei Ringnuten 26 und 28 für je einen Dichtring umschlossen ist und sich in ein nicht dargestelltes Gehäuse eines üblichen Bremsdruckmodulators einstecken läßt.

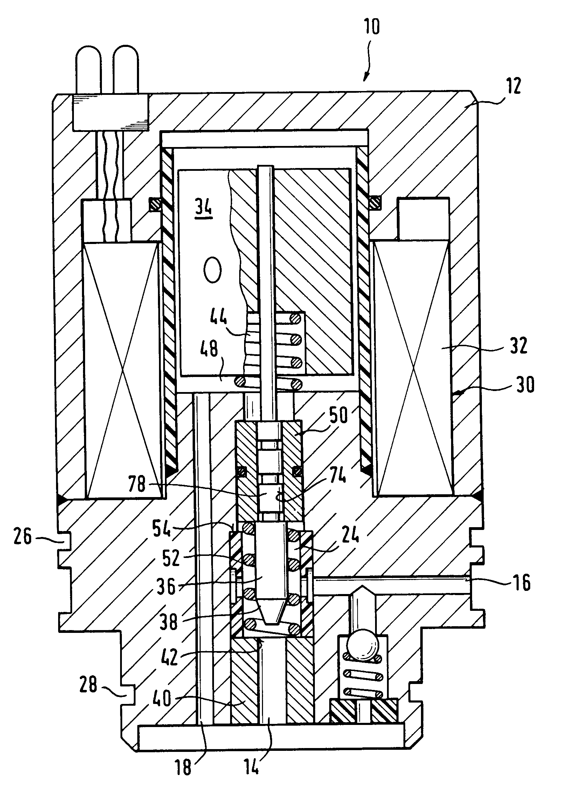

Zu dem dargestellten Ventil 10 gehört ein Elektromagnet 30 mit einer Spule 32, die im Ventilgehäuse 12 oder rings um dieses angeordnet ist, und mit einem Anker 34, der innerhalb des Ventilgehäuses 12 längs dessen Hauptachse beweglich geführt ist. Der Anker 34 dient zum Betätigen eines Ventilteils 36, das einen kegelförmigen Schließkörper 38 aufweist und mit einem Ventilteil 40 zusammenwirkt, das einen ringförmigen Ventilsitz 42 aufweist. Das Ventil 10 ist in stromlosem Zustand offen; dafür sorgt eine Rückstellfeder 44, die sich am Ventilgehäuse 12 abstützt und den Anker 34 in Öffnungsrichtung, in der Zeichnung nach oben, vorspannt.

Im Ventilgehäuse 12 ist gleichachsig mit den Ventilteilen 36 und 40 eine zylindrische Steuerkammer 48 ausgebildet, in der unabhängig von der Stellung der Ventilteile 36 und 40 in bezug zueinander der gleiche Druck herrscht wie am Einlaß 14. Die Steuerkammer 48 ist nach unten durch ein Stellglied 50 begrenzt. Das Stellglied 50 ist ein Kolben, der durch eine Feder 52 normalerweise in eine Ruhestellung gedrängt wird, in der die Steuerkammer 48 ihr kleinstmögliches Volumen hat. Die Ruhestellung des Stellglieds 50 ist durch die Gestaltung des Ventilgehäuses 12 genau festgelegt. Aus der Ruhestellung läßt sich das Stellglied 50 durch Fluiddruck, wenn dieser am Einlaß 14 merklich größer als am Auslaß 16 ist, in eine Anschlagstellung nach unten drängen. Auch die Anschlagstellung ist ein für allemal festgelegt, nämlich durch eine im Ventilgehäuse 12 ausgebildete Schulter 54.

In seiner Anschlagstellung verhindert das Stellglied 50 ein vollständiges Öffnen des Ventils 10; dabei ist der normale Öffnungshub des Schließkörpers 38 um die Strecke vermindert, um die das Stellglied 50 zwischen seiner Ruhestellung und seiner Anschlagstellung bewegbar ist. Das Ventil kann sich infolgedessen nur teilweise öffnen, so daß die Fluidströmung zwischen Schließkörper 38 und Ventilsitz 42 in dem gewünschten Maß gedrosselt wird.

Gemäß der Zeichnung ist der zusätzliche Anschluß 18 unmittelbar neben dem Einlaß 14 angeordnet. Eine weitere Besonderheit der dargestellten Ausführungsform besteht darin, daß das Stellglied 50 axial zwischen dem Schließkörper 38 und der Steuerkammer 48 angeordnet ist. Das Stellglied 50 hat eine durchgehende axiale Bohrung 74, in der ein kolbenartig gestalteter Mittelabschnitt 78 des Ventilteils 36 geführt ist. Der Durchmesser der Bohrung 74 ist kleiner als der wirksame Durchmesser des Ventilsitzes 42. Das Ventil 10 ist deshalb unabhängig von der Wirkung der Feder 52 bestrebt, sich zu öffnen, wenn am Einlaß 14 ein Druck anliegt, der ausreicht, Reibung und je nach Anordnung des Ventils auch durch Schwerkraft bedingte Widerstände gegen eine Verschiebung des Ventilteils 36 und des Ankers 34 zu überwinden. Das Ventil bleibt somit auch dann funktionsfähig, wenn die Feder 52 gebrochen sein sollte.

## Patentansprüche

1. Elektromagnetisch betätigtes Ventil, insbes. für Antiblockiersysteme in Kraftfahrzeugen, mit
- einem Ventilgehäuse (12), das einen Einlaß (14) und einen Auslaß (16) aufweist,
- zwei Ventilteilen (36, 40), von denen eines einen Schließkörper (38) und das andere einen Ventilsitz (42) aufweist,
- einem Elektromagneten (30) und einer Rückstellfeder (44), mit denen eines der beiden Ventilteile (36, 40) in bezug auf das andere zwischen einer Offenstellung und einer Schließstellung hin- und herbewegbar ist, und
- einen im Ventilgehäuse (12) angeordneten Stellglied (50), das abhängig von einem Druckunterschied zwischen Einlaß (14) und Auslaß (16) aus einer Ruhestellung in eine Anschlagstellung bewegbar ist, in der das Stellglied (50) ein vollständiges Öffnen des Ventils verhindert,
dadurch **gekennzeichnet,** daß das vom Elektromagneten (30) bewegbare Ventilteil (36) kolbenartig axial verschiebbar in einer axial durchgehenden Bohrung (74) im Stellglied (50) geführt ist.

2. Ventil nach Anspruch 1,
dadurch **gekennzeichnet,** daß der Ventilsitz (42) einen größeren Durchmesser hat als die Bohrung (74) im Stellglied (50).

## Claims

1. A solenoid operated valve, especially for motor vehicle antilocking systems, comprising
- a valve casing (12) including an inlet (14) and an outlet (16),
- two valve elements (36, 40), one element thereof including a closing member (38) and the other element thereof including a valve seat (42),
- a solenoid (30) and a readjusting spring (44) for reciprocally moving one of the two valve elements (36, 40) with regard to the other element between an opened position and a closed position, and
- an actuating member (50) arranged in the valve casing (12) which is movable in response to a pressure difference between inlet (14) and outlet (16) from a rest position to a stop position in which the complete opening of the valve is avoided by said actuating member (50),
**characterized** in that the valve element (36) which can be moved by said solenoid (30) is guided like a piston axially movable in a bore (74) which axially passes through said actuating member (50).

2. The valve according to claim 1,
**characterized** in that the diameter of the valve seat (42) is larger than that of the bore (74) in said actuating member (50).

## Revendications

1. Vanne en actionnement électromagnétique, en particulier pour système anti-blocage de véhicules à moteur, comprenant :
- un boîtier de vanne (12) comportant une entrée (14) et une sortie (16)
- deux parties de vanne (36, 40) dont l'une comporte un organe d'obturation (38) et l'autre un siège de vanne
- un électro-aimant (30) et un ressort de rappel (44) grâce auxquels les deux parties de vanne (36, 40) peuvent être déplacées à va-et-vient entre une position d'ouverture et une position de fermeture, et
- un coulisseau (50) disposé dans le boîtier (12), qui peut se déplacer, sous l'effet de la différence de pression entre l'entrée (14) et la sortie (16) depuis une position de repos jusqu'à une position d'arrêt dans laquelle ce coulisseau (50) empêche une ouverture complète de la vanne,
caractérisé en ce que la partie de vanne (36) qui peut être déplacée par l'électro-aimant (30) est guidée axialement pour pouvoir coulisser axialement dans un alésage axial (74) qui traverse le coulisseau (50).

2. Vanne selon la revendication 1, caractérisé en ce que le siège de vanne (42) a un diamètre supérieur à celui de l'alésage (74) du coulisseau (50).
